# EUROPEAN PATENT SPECIFICATION

(11) **EP 2 377 643 B1**
(45) Date of publication and mention of the grant of the patent: **07.08.2019**
(21) Application number: 11425107.7
(22) Date of filing: 15.04.2011
(51) Int. Cl.: B23K 37/04

(54) **Welding fixture for a bar truss girder**
Haltevorrichtung für das Schweissen eines Gitterträgers
Organe de fixation pour le soudage de poutrelles en treillis

(30) Priority: 15.04.2010 IT RM20100180
(43) Date of publication of application: 19.10.2011
(73) Proprietor: Mazzocchitti, Dino, 64032 Atri (TE) (IT)
(72) Inventor: Mazzocchitti, Dino, 64032 Atri (TE) (IT)
(74) Representative: Santi, Filippo

(56) References cited:
- FR-A1- 2 914 269
- JP-A- 10 297 724
- US-A- 5 190 207

## Description

The present invention concerns welding fixtures for being used in a welding process operated by an automatic equipment, such as known from JP-A-10-297724.

More in detail, the invention concerns welding fixtures for joining together metal tubular elements to form bar truss girders.

It is known that automatic welding equipments allow for overcoming some inevitable drawbacks deriving from manually operated welding. In particular, automatic welding equipments allow for overcoming the problem of a production quality which is not constant and is difficult to control, thus assuring an optimal control of the parameters needed for a good welding, with a great reduction of production time and costs.

Automatic welding equipments are constituted by an industrial robot, provided with a welding head, on a support arm of the robot, movable in the space along a plurality of coordinated axes. All is controlled by an automatic control unit, where the features of the pieces to be welded are set, in particular their position.

In order to assure the correct welding of all pieces, it is therefore fundamental that the welding head can find the pieces to be welded already close to each other and exactly in the position determined and set by the automatic control unit, in other words it os essential that the position of the pieces to be joined together is rigidly grant. To this aim, specific supporting and moving means are used, called welding fixture tables or, more simply, welding fixtures, providing for an housing for the different pieces to be joined together and, therefore, allowing for achieving the approach of the pieces to be welded assuring at the same time the correctness of their position.

Thus, the welding process provides for a preliminary step of positioning the pieces to be joined together by welding in the relative welding fixture, the resulting arrangement being then positioned in the automatic welding equipment.

This kind of method is, at present, the most common, but it presents some limitations anyway, in particular depending from the dimensional complexity of the final product that it is desired to obtain by welding such pieces.

For example, this process does not allow to assemble bar truss girders having a square section of the kind commonly used for the realization of modular structures such as for example exposition stands or stages. In fact, the welding fixtures of the known type does not allow for suitably supporting all the sides of this kind of bar truss girders without forming an obstacle to the movement of the welding head. In fact, if on one hand it is possible to have welding fixtures for the preparation of a single side of this kind of bar truss girders, on the other hand the final assembly compulsorily provides for a manual welding step, involving all the quality and costs drawbacks already discussed. The only solution that would not form an obstacle to the operations of the welding head would be that of a welding fixture arranged inside the structure of the bar truss girder, that would pose problems difficult to solve for its removal after welding.

In the light of the above, it is evident the need for disposing of welding fixtures for a welding process operated by an automatic equipment allowing for the realization of spatially complex structures.

In this context it is presented the solution according to the present invention, with the aim of providing for welding fixtures to be used in a welding process operated by an automatic equipment not only allowing for the realization of structures that up at present can be only manually realized, but also perfectly suitable for being used with presently available automatic welding equipments, without the need of modifying the same.

These and other results are achieved according to the present invention providing for welding fixtures for being used in a welding process operated by an automatic equipment providing for a real preliminary assembly of the structure of pieces to be welded, the task of said welding fixtures therefore not being that of assuring the approaching of pieces to be welded but more simply that of supporting only some pieces to be welded, in particular the carrying pieces, or alternatively the pieces can be reached more easily by the welding head.

An aim of the present invention is therefore that of providing for welding fixtures allowing for overcoming the limits of the solutions according to the prior art and achieving the previously disclosed technical results.

A further aim of the invention is that said welding fixtures can be realised with substantially reduced costs, as far as both production costs and management costs is concerned.

Not last aim of the invention is that of providing for welding fixtures being substantially simple, safe and reliable.

It is therefore a specific object of the present invention a welding fixture for supporting and moving elements to be welded operated by an automatic equipment according to claim 1.

Additional characterizing features of the welding fixture of the present invention are specified in the dependent claims.

According to the invention, said coupling means of the welding fixture are positioned on two opposed plates, arranged on supporting bars, at least one of said plates being free to move away and to come close to the other and at least one of said plates being integrally coupled to moving means controlled by said automatic equipment.

Preferably, according to the invention, said welding fixture further comprises one or more intermediate supporting elements for the structure constituted by said elements to be welded, said intermediate supporting elements being applied and removed without disassembling said supporting bars and/or said plates.

Finally, always according to the present invention, said plates comprise a plurality of positions for said coupling means.

It is evident the efficacy of the a welding fixture for supporting and moving elements to be welded operated by an automatic equipment of the present invention, allowing for achieving the desired purposes, with the further advantage of achieving an important saving of storage space, since the possibility of having welding fixtures that can be adapted to different length and sections allows for avoiding the need for having a different welding fixture for any little change of the dimensional features of the product to be obtained by welding.

The present invention will now be disclosed, for illustrative non limitative purposes, according to a preferred embodiment, with reference in particular to the figures of the enclosed drawings, wherein:
- figure 1 shows a perspective view of the elements of a bar truss girder according to the present invention,
- figure 1A shows in detail the elements of the region identified with A of figure 1,
- figure 2 shows a front view of the elements of the bar truss girder of figure 1,
- figure 3 shows a plan view of the elements of the bar truss girder of figure 1,
- figure 4 shows a perspective view of a welding fixture for a bar truss girder according to the present invention,
- figure 5 shows a lateral view of the welding fixture of figure 4,
- figure 6 shows a plan view of the welding fixture of figure 4,
- figure 7 shows a front view of the welding fixture of figure 4, and
- figure 8 shows a perspective view of the bar truss girder of figures 1-3 arranged pre-assembled in the welding fixture of figures 4-7.

The welding process making use of the a welding fixture for supporting and moving elements to be welded operated by an automatic equipment according to the present invention provides for a first step of preassembling the elements to be subsequently joined together by welding, followed by a a step of welding the preassembled pieces by means of an automatic welding equipment, with the help of a welding fixture forming an obstacle the most little as possible to the movement of the welding head. Performing the process according to the present invention implies the use of suitably modified elements to be welded and welding fixtures, as will be shown in the following for exemplificative purposes with reference to a bar truss girder having a square section for exposition stands and stages.

In the process any kind of known automatic welding equipment can be conveniently used, provided it comprises means suitable for allowing the welding head movements with as many degrees of freedom as it is needed for that type of use. Therefore, it is pointed out that the structure of the automatic welding equipment is not limiting and therefore is not described but for as much as it is needed for the comprehension of the aspects of the process according to the present invention.

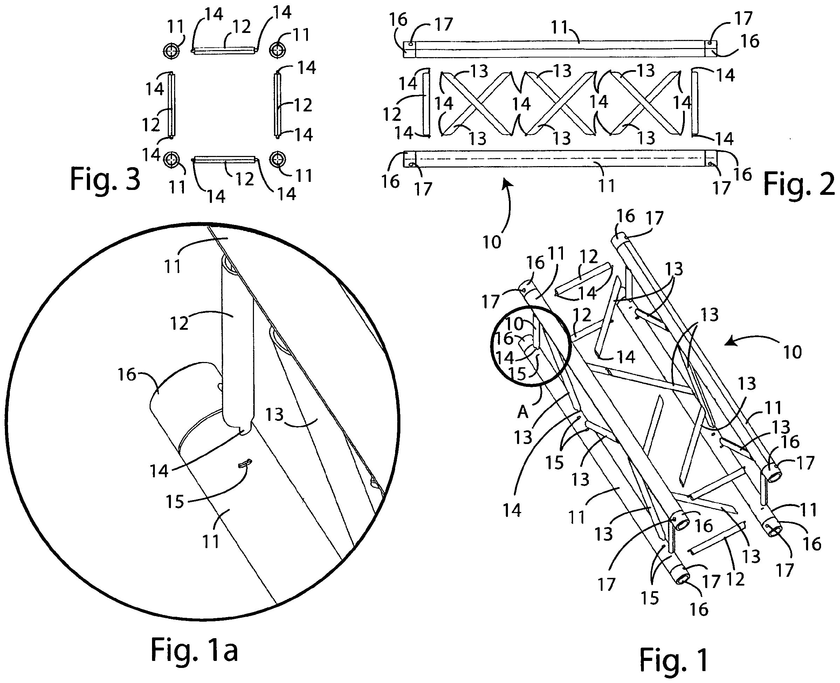

With reference to figures 1-3, a bar truss girder having a square section is referred to as a whole with the numeral 10 and comprises four main elements 11, being carrying elements, arranged on the corners of the bar truss girder 10, connected by means of secondary cross elements 12 and secondary oblique elements 13, bracings, according to the normal shape of this kind of bar truss girder. The specification refers to this kind of bar truss girder for purely exemplificative purposes, and it is evident that the welding process according to the present invention can be applied to bar truss girders having different sections (flat, triangular, hexagonal, etc), but also to other kinds of objects to be welded, with modifications that will be obvious for a person skilled in the art.

At the opposite edges of each secondary cross element 12 and of each secondary oblique element 13, tabs 14 are present, having suitable dimensions for the insertion in corresponding slots 15 provided on the main elements 11.

The role of the coupling system made of tabs 14 and slots 15 is that, according to the process of the present invention, of allowing preassembling the pieces to be joined together by welding. The result of such a preassembly is that of making easier the following step of welding, in particular by making easier the form of the welding fixture that is needed in order to put the different pieces to be welded in a position that can be reached by the automatic welding equipment.

The preassembly obtained by the system made of tabs 14 and corresponding slots 15 is particularly advantageous thanks to its simple making and the consequent operative speed. Nevertheless, the process of the present invention is not to be intended as limited to the use of said tabs 14 and slots 15 system only, but rather any solution of preliminary assembly of pieces to be welded together is equally suitable for the use in the process.

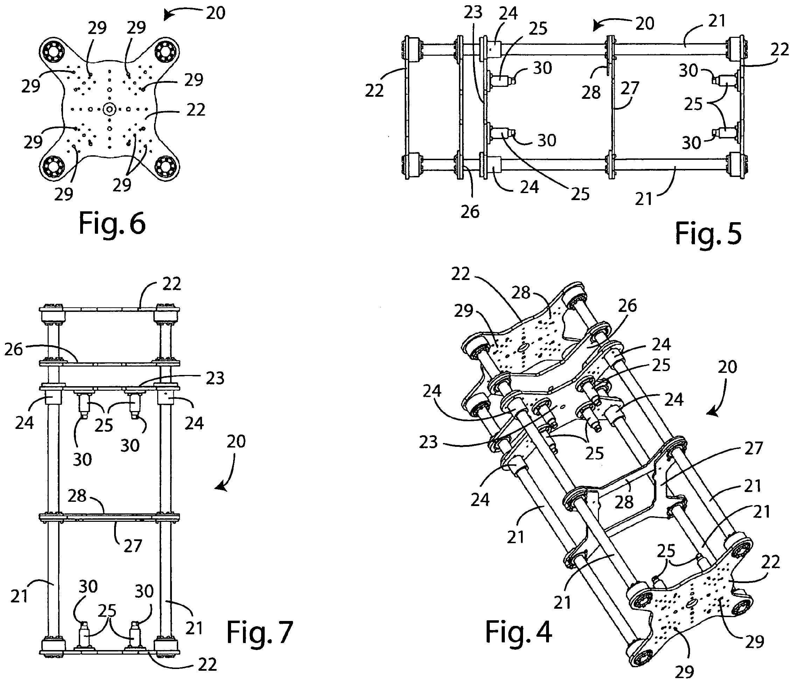

With reference also to figures 4-8, with the aim of allowing for the disposition of the preassembled bar truss girder 10 in the welding fixture 20, in correspondence of each edge of the main elements 11 a cylindrical seat 16 is present, provided with a side hole 17, respectively for the housing of a corresponding pin 25 of the welding fixture, provided with a hole 30, and for the insertion of a plug 31, which, passing through said side hole 17 of the cylindrical seat 16 and said hole 30 of the pin 25, fixes the coupling of said cylindrical seat 16 and said pin 25.

Figures 4-7 show in particular a welding fixture, referred as a whole with the numeral 20, for the use with the bar truss girder of figures 1-3.

The welding fixture 20 is constituted by a frame comprising four support bars 21, joined at their opposed edges to two fixed plates 22. On the support bars 21, in an intermediate position with respect to the fixed plates 22, is further assembled a moving plate 23, provided with four sleeves 24, one for each support bar 21, allowing for the longitudinal sliding of the moving plate 23 with respect to the support bars 21.

On one of the two fixed plates 22 four pins 25 are located, facing towards the moving plate 23 and intended for coupling with respective cylindrical seats 16 of the main elements 11 of bar truss girder 10. A corresponding number of pins 25 are arranged on the moving plate 23, facing towards the pins 25 of the fixed plate 22 provided with them.

The bar truss girder 10, already assembled, is arranged on the welding fixture 20 by keeping away the moving plate 23 with respect to the fixed plate 22 provided with pins 25, placing the bar truss girder 10 amongst the fixed plate 22 and the moving plate 23 and therefore approaching again the fixed plate 22 and the moving plate 23 until the insertion of the respective pins 25 within the corresponding cylindrical seats 16 of the main elements 11 of bar truss girder 10 becomes possible. Then, the coupling of each cylindrical seat 16 of main elements 11 of bar truss girder 10 and the corresponding pin 25 of the fixed plate 22 and the moving plate 23 of the welding fixture 20 is locked by means of the insertion of a plug 31 into the side hole 17 of the cylindrical seat 16 and into the corresponding hole 30 of the pin 25, as previously said.

In order to define with an higher detail the necessary degree of removal of the moving plate 23 with respect to the fixed plate 22, as a function of the length of a series of all identical bar truss girders 10, the welding fixture 20 is further provided with a support plate 26, the position of which is adjusted according to the length of said series of all identical bar truss girders 10 and kept fixed until the length of the bar truss girders 10 changes, and defining the limit of the removal movement of the moving plate 23 with respect to the fixed plate 22.

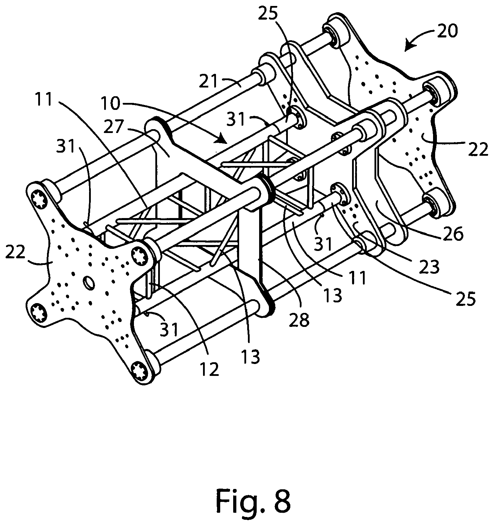

Differently from the welding fixtures of the prior art, the welding fixture 10 according to the present invention does not have the role of assuring the approaching of the pieces to be welded, already assembled, but more simply that of supporting only some pieces to be welded, in particular some carrying pieces, which in turn support the other pre-assembled pieces. Further, plates 22 operates the clamping of the welding fixture 20 with a position controller of the automatic welding equipment, since, in the step of welding, the bar truss girder 10 housed in the welding fixture must be turned, together with the welding fixture 20, around its own axis in order to be reached by the welding head in all of its part. In some cases, the length of the bar truss girder 10 could involve the risk of an inflection of the longitudinal elements, that could compromise the precision of the preassembly and hence that of the whole structure of the bar truss girder. In order to avoid it, the welding fixture 20 is provided with one or more intermediate supporting elements 27, each being constituted by a frame provided with a openable side 28 for allowing the insertion and removal of the bar truss girder 10 in the welding fixture 20, said intermediate supporting elements 27 being suitable for being applied and removed from the welding fixture 20 without any need for unmounting the support bars 21 and/or plates 22, 23 and being free to longitudinally slide along support bars 21. Once it is introduced within the welding fixture 20, the pre-assembled bar truss girder 10 is therefore supported at the edges of the main elements 11 but also in intermediate positions, in correspondence of said intermediate positions the main elements 11 laying on the intermediate supporting elements 27. Moreover, the structure of the intermediate supporting elements 27 is such that it does not form an obstacle for the mobile welding head of an automatic welding equipment, as shown by figure 8 where the arrangement of a bar truss girder 10 within a welding fixture according to the present invention is shown.

The possibility of changing the position of the moving plate 23 allows for adapting the welding fixture 20 to the longitudinal dimensions of the bar truss girders to be welded.

In order to allow for adapting the welding fixture 20 to the lateral dimensions of the bar truss girders to be welded, on the fixed plates 22 and on the moving plate 23 a series of arrangement positions 29 are provided for pins 25, each position being formed by a series of holes for the passage of screws or other coupling elements between each pin 25 and the plate.

It is evident that performing the process according to the present invention involves the use of elements to be welded and welding fixtures suitably modified with respect to those of the prior art, but also that modifications needed to the elements to be welded does not involve any particular difficulty, but rather allow for achieving various advantages.

In particular, the need for preparing the pieces to be welded with the needed modifications already during their production allows for assuring that all the pieces, being realized in the industry, are identical to each other and realized by respecting the needed characteristics. In particular, with reference to the specific product shown for esemplificative purposes with reference to figures 1-3, the position of the slots on the main elements 11 will always be precisely set, consequently the secondary cross elements 12 and oblique elements 13 will be always precisely mounted.

The present invention was described for illustrative non limitative purposes, according to preferred embodiments, but it has to be understood that variations and/or modifications can be made by the skilled in the art without escaping the relative scope of protection, as defined by the enclosed claims.

## Claims

1. Welding fixture (20) for a bar truss girder, for holding pre-assembled elements to be welded by an automatic equipment to form said bar truss girder, **characterised in that** it comprises four supporting bars (21), joined at their opposed edges to two fixed plates (22), an intermediate moving plate (23), apt to longitudinally slide along said supporting bars (21), coupling means (25, 30, 31) being provided on one of said fixed plates (22) and on said moving plate (23) for coupling with corresponding coupling means (16, 17) of carrying longitudinal elements (11) of said bar truss girder to be welded, while second elements to be welded, constituted by the remaining elements to be welded to form said bar truss girder, being pre-assembled together with said longitudinal elements to be welded.

2. Welding fixture (20) according to claim 1, **characterised in that** at least one of said plates (22, 23) is apt to be integrally coupled to moving means controlled by said automatic equipment.

3. Welding fixture (20) according to any of the previous claims, **characterised in that** it further comprises one or more intermediate transversal supporting elements (27) for the structure constituted by said pre-assembled elements (11, 12, 13) to be welded.

4. Welding fixture (20) according to any of the previous claims, **characterised in that** said plates (22, 23) comprise a plurality of positions for said coupling means (25, 30, 31).

## Patentansprüche

1. Schweißvorrichtung (20) für einen Stabfachwerkträger zum Halten von vormontierten Elementen, die von einer automatischen Vorrichtung zum Bilden des Stabfachwerkträgers zu schweißen sind, **dadurch gekennzeichnet, dass** sie vier Tragstäbe (21), die an ihren gegenüberliegenden Kanten mit zwei festen Platten (22) verbunden sind, eine dazwischenliegende bewegliche Platte (23), die geeignet ist, entlang der Tragstäbe (21) in Längsrichtung zu gleiten, und Kopplungsmittel (25, 30, 31) umfasst, die auf einer der festen Platten (22) und auf der beweglichen Platte (23) zum Koppeln mit entsprechenden Kopplungsmitteln (16, 17) von tragenden Längselementen (11) des zu schweißenden Stabfachwerkträgers vorgesehen sind, während zweite zu schweißende Elemente, die aus den übrigen zu schweißenden Elementen zum Bilden des Stabfachwerkträgers bestehen, zusammen mit den zu schweißenden Längselementen vormontiert werden.

2. Schweißvorrichtung (20) nach Anspruch 1, **dadurch gekennzeichnet, dass** mindestens eine der Platten (22, 23) geeignet ist, integral mit Bewegungsmitteln gekoppelt zu sein, die von der automatischen Vorrichtung gesteuert werden.

3. Schweißvorrichtung (20) nach einem der vorstehenden Ansprüche, **dadurch gekennzeichnet, dass** sie weiterhin ein oder mehrere dazwischenliegende transversale Stützelemente (27) für die Struktur umfasst, die aus den vormontierten zu schweißenden Elementen (11, 12, 13) besteht.

4. Schweißvorrichtung (20) nach einem der vorstehenden Ansprüche, **dadurch gekennzeichnet, dass** die Platten (22, 23) eine Vielzahl von Positionen für die Kopplungsmittel (25, 30, 31) aufweisen.

## Revendications

1. Organe de fixation de soudure (20) pour une poutrelle en treillis à barres, pour le maintien d'éléments préassemblés devant être soudés par un équipement automatique pour former ladite poutrelle en treillis à barres, **caractérisé en ce qu'**il
comprend quatre barres de support (21), jointes au niveau de leurs arêtes opposées à deux plaques fixées (22), une plaque mobile intermédiaire (23), apte à coulisser longitudinalement le long desdites barres de support (21), des moyens de couplage (25, 30, 31) étant prévus sur une desdites plaques fixées (22) et sur ladite plaque mobile (23) pour le couplage avec des moyens de couplage correspondants (16, 17) d'éléments longitudinaux porteurs (11) de ladite poutrelle en treillis à barres devant être soudée, alors que des seconds éléments devant être soudés, constitués par les éléments restants devant être soudés pour former ladite poutrelle en treillis à barres, sont préassemblés conjointement avec lesdits éléments longitudinaux devant être soudés.

2. Organe de fixation de soudure (20) selon la revendication 1, **caractérisé en ce qu'**au moins une desdites plaques (22, 23) est apte à être couplée d'un seul tenant à des moyens mobiles commandés par ledit équipement automatique.

3. Organe de fixation de soudure (20) selon l'une quelconque des revendications précédentes, **caractérisé en ce qu'**il comprend en outre un ou plusieurs éléments de support transversaux intermédiaires (27) pour la structure constituée par lesdits éléments préassemblés (11, 12, 13) devant être soudés.

4. Organe de fixation de soudure (20) selon l'une quelconque des revendications précédentes, **caractérisé en ce que** lesdites plaques (22, 23) comprennent une pluralité de positions pour lesdits moyens de couplage (25, 30, 31).
